## Europäisches Patentamt
## European Patent Office
## Office européen des brevets

(11) Veröffentlichungsnummer: **0 567 930 B1**

## EUROPÄISCHE PATENTSCHRIFT

(45) Veröffentlichungstag der Patentschrift: **13.09.95**

(51) Int. Cl.⁶: **B01D 45/16**

(21) Anmeldenummer: **93106575.9**

(22) Anmeldetag: **22.04.93**

(54) **Tropfenabscheider.**

(30) Priorität: **29.04.92 DE 4214094**

(43) Veröffentlichungstag der Anmeldung:
**03.11.93 Patentblatt 93/44**

(45) Bekanntmachung des Hinweises auf die
Patenterteilung:
**13.09.95 Patentblatt 95/37**

(84) Benannte Vertragsstaaten:
**AT BE CH DE DK ES FR GB GR IE IT LI LU MC
NL PT SE**

(56) Entgegenhaltungen:
**DE-C- 3 330 533
DE-C- 3 702 830
US-A- 1 926 924**

(73) Patentinhaber: **Wurz, Dieter, Prof. Dr.-Ing.
Gartenweg 7
D-76530 Baden-Baden (DE)**

(72) Erfinder: **Wurz, Dieter, Prof. Dr.-Ing.
Gartenweg 7
D-76530 Baden-Baden (DE)**

(74) Vertreter: **Liesegang, Roland, Dr.-Ing. et al
FORRESTER & BOEHMERT
Franz-Joseph-Strasse 38
D-80801 München (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

**Beschreibung**

Die Erfindung betrifft einen Tropfenabscheider zum Abscheiden von Tropfen aus einer flüssigkeitsbeladenen Gasströmung mit wellenförmigen Profilen, die jeweils eine Eintrittspartie in Gestalt einer Halbwelle kleiner Amplitude und Wellenlänge, eine Mittelpartie in Gestalt einer Hauptwelle großer Amplitude und Wellenlänge und eine Austrittspartie kleiner Amplitude und Wellenlänge aufweisen, die Strömungskanäle mit Umlenkungen bilden, in denen die Gasströmung abwechselnd beschleunigt und verzögert wird.

Einleitend sollen kurz die wesentlichen Eigenschaften von Tropfenabscheidern dieser Art sowie die relevanten Fachbegriffe behandelt werden. Eine Umlenkung wird vom Profilende zum nächsten Wendepunkt der Profilkrümmung bzw. zwischen zwei Wendepunkten gerechnet.

**Primärtropfen** sind Tropfen, die mit der Gasphase in den Tropfenabscheider eintreten.

**Grenztropfendurchmesser:** Tropfen, deren Durchmesser größer ist als der Grenztropfendurchmesser, haben im Tropfenabscheider Wandkontakt. Dabei kann es jedoch zur Tropfenreflexion kommen, so daß diese Tropfen, ähnlich einer Billardkugel, durch ein- oder mehrmalige "Bandenreflexion" den Tropfenabscheider passieren können. Demnach ist der tatsächliche Grenztropfendurchmesser im Gas stromab des Tropfenabscheiders größer als der rechnerische Wert, der bisher auf theoretischem Wege noch nicht hinsichtlich des Reflexionsgeschehens korrigiert werden kann.

**Tropfenmitriß, Durchrißgrenze, Sekundärtropfen:** Als **Tropfenmitriß** bezeichnet man einen Vorgang, bei dem größere Tropfen durch die Wirkung der Gasströmung aus Wasseransammlungen herausgerissen werden, die sich auf den Abscheidewänden der Tropfenabscheider gebildet haben. Bei horizontal eingebauten und vertikal aufwärtsgerichtet angeströmten Tropfenabscheidern liegt die **Durchrißgrenze**, d. h. die Geschwindigkeit, ab der unter bestimmten Randbedingungen Tropfenmitriß auftritt bei 3,5 - 5,5 $m \cdot s^{-1}$. Tropfen, die infolge Reflexion oder durch Mitriß den Tropfenabscheider passieren konnten, bezeichnet man als **Sekundärtropfen**.

Ein Überschreiten der Durchrißgrenze muß unbedingt vermieden werden. Die Durchrißgrenze hängt einmal von der Strömungsgeschwindigkeit der Gasphase, der Tropfenbeladung und -größenverteilung, den Stoffwerten der beiden Phasen, aber auch in starkem Maße von der Geometrie der Tropfenabscheider-Profile ab. Unter Geometrie ist hier sowohl die Grob- als auch die Feinstruktur bis hin zur Oberflächenrauhigkeit zu verstehen.

Da die Geschwindigkeitsverteilung beispielsweise im Waschturm einer Rauchgas-Entschwefelungsanlage (REA) erhebliche Inhomogenitäten aufweisen kann, besteht die Gefahr, daß bereichsweise die Durchrißgrenze auch dann überschritten wird, wenn die mittlere Strömungsgeschwindigkeit noch weit unterhalb dieses Grenzwertes liegt. Es besteht daher ein großes Interesse an Tropfenabscheidern, die eine hohe Durchrißgrenze aufweisen, so daß ein erheblicher Sicherheitsabstand zum Auslegungswert gegeben ist. Ferner erlaubt ein Tropfenabscheider mit hoher Durchrißgrenze eine kostensparende Verringerung des Einbauquerschnittes. Darüber hinaus sind hohe Strömungsgeschwindigkeiten natürlich insofern vorteilhaft, als der Grenzdurchmesser von Tropfen, die gerade noch abgeschieden werden, mit zunehmender Strömungsgeschwindigkeit immer kleiner wird; damit reduziert sich der Prozentsatz jener Tropfen, die den Tropfenabscheider passieren können und demnach auch die Resttropfenbeladung des Gases.

Es versteht sich von selbst, daß der Druckverlust eines Tropfenabscheiders in der Regel niedrig sein sollte. Dies gilt insbesondere für den Einsatz in Naturzug-Kühltürmen. In Rauchgaswäschern kann jedoch die Anströmung der Tropfenabscheider so ungleichförmig sein, daß ein erhöhter Druckverlust im Tropfenabscheider zur Vergleichmäßigung des Strömungsfeldes vorteilhaft ist.

Eine ganz entscheidende Eigenschaft von Tropfenabscheidern für den Einsatz unter Randbedingungen, die eine Belagsbildung auf den Profilen bewirken können, ist eine geringe Verkrustungsneigung sowie abreinigungsfreundliche Geometrie. Daß neben diesen verfahrenstechnischen Aspekten auch die Abmessungen des Tropfenabscheiders, der Materialbedarf und die Fertigungskosten von Bedeutung sind, muß bei der Entwicklung eines Tropfenabscheiderprofiles unbedingt berücksichtigt werden.

Tropfenabscheider der oben beschriebenen Art sind seit vielen Jahren auf dem Markt.

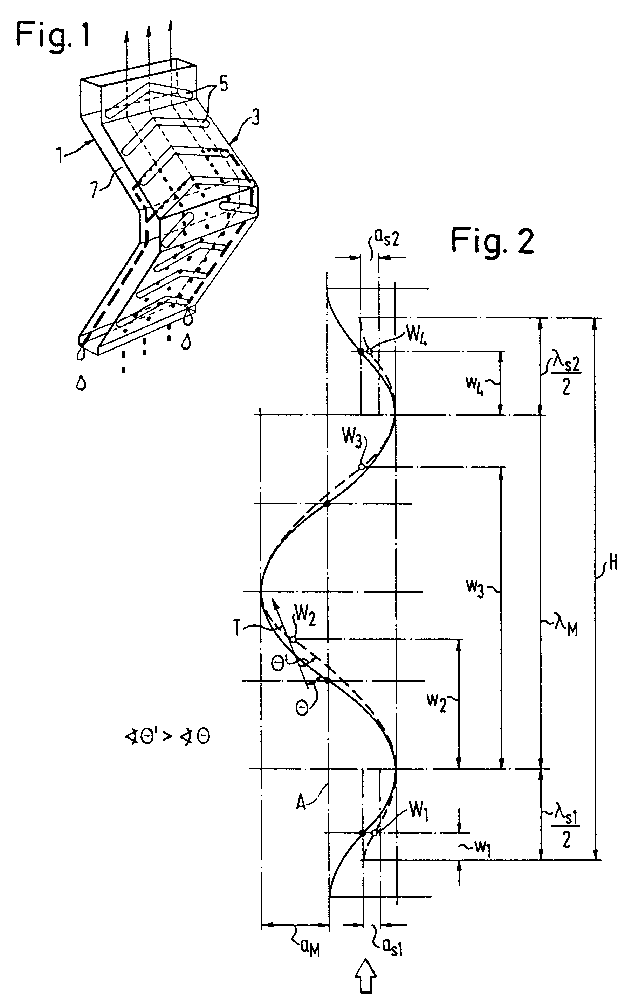

Ein bekannter Abscheider, von dem in Fig. 1 zwei benachbarte Profile 1, 3 gezeigt sind, weist schräg verlaufende Drainagerillen 5 auf, über die die abgeschiedene Flüssigkeit in die Ecken zwischen den alle 10 cm angeordneten Schottwänden 7 und den Prallflächen geleitet wird. Dieser Tropfenabscheider kann damit auch bei relativ hohen, vertikal aufwärts gerichteten Gasgeschwindigkeiten sowie bei einer großen Tropfenbeladung des Gases eingesetzt werden, ohne daß Tropfenmitriß auftritt. Es hat sich jedoch gezeigt, daß dieser Abscheider unter bestimmten Randbedingungen zur Verkrustung neigt und nicht ohne weiteres abgereinigt werden kann. Dies dürfte nicht zuletzt auf die annähernd horizontal verlaufenden Drainagerillen 5 sowie auf die relativ eng stehenden Schottwände 7 zurückzuführen sein. Durch die Schottwände werden Teilbereiche gegen den kegeligen Bedüsungsstrahl abgeschirmt, der zur Abreinigung der feststoffbelegten

2

Flächen auf den Tropfenabscheider gerichtet wird. Demnach besteht Bedarf nach einem Tropfenabscheider mit wenigstens gleich guter Abscheideleistung (gleicher Grenztropfendurchmesser, gleiche Durchrißgrenze), der nicht mit diesen Nachteilen behaftet ist und überdies kostengünstiger hergestellt werden kann, z. B. durch Extrusion anstatt durch Spritzguß.

Diesen Bedürfnissen genügt im wesentlichen der Tropfenabscheider gemäß der DE 37 02 830 C1. Kennzeichnendes Hauptmerkmal dieses bekannten Abscheiders ist eine stetige Verjüngung des effektiven Kanalquerschnittes zwischen zwei benachbarten Profilen über mindestens zwei abscheidewirksame Umlenkungen hinweg. Dieser bekannte Abscheider zeichnet sich durch besonders geringen Druckverlust bei guter Abscheideleistung aus.

Aus der GB 1465044 ist ein Tropfenabscheider bekannt, bei dem die Wellenlänge in Hauptströmungsrichtung abnimmt. Die SU 0 578 985 zeigt und beschreibt einen Tropfenabscheider mit rotationssymmetrischer Gesamtkonfiguration, bei der eine Zunahme von Wellenlänge und Wellenamplitude in Strömungsrichtung zwingend ist. Die wesentliche Lehre der vorliegenden Anmeldung besagt jedoch, daß Wellenlänge und Amplitude bei ebener Anströmung der Tropfenabscheider auf eine vorteilhafte Weise zunächst zu- und dann abnehmend ausgeführt werden soll, so daß im vorderen Abschnitt die größeren und im mittleren Abschnitt die kleineren Primärtropfen erfaßt werden, während im Austrittsabschnitt reflektierte größere Tropfen eingefangen werden, woraus entscheidende Vorteile für die Durchströmung resultieren (Druckverlust geringer, Durchrißgeschwindigkeit höher).

Bei einem Tropfenabscheider mit den Merkmalen des Oberbegriffs des Anspruch 1 nach der Dissertation von Engels (Engels, Peter: Untersuchungen des Abscheideverhaltens von Tropfenfanggittern in senkrecht aufsteigendem Luftstrom; Dissertation, RWTH Aachen, 1971), dessen Skelettlinie in Fig. 2 durchgezogen dargestellt ist, sind eintritts- und austrittsseitig Wellen geringer Längen und geringer Amplitude, sogenannte Satellitenwellen, und im Mittelbereich eine Welle großer Wellenlänge und Amplitude, eine sogenannte Hauptwelle, dargestellt. Haupt- und Satellitenwellen sind exakt sinusförmig.

Aus der DE-C-3 330 533 ist ein Tropfenabscheider zum Abscheiden von Tropfen aus einer Gasströmung mittels mit Verengungen und Umlenkungen versehenen Profilen bekannt, wobei die Profile in Strömungsrichtung gesehen eine Gasbeschleunigungsstrecke mit Querschnittsverringerung des Strömungskanals und daran anschließend eine Tropfenbeschleunigungsstrecke mit im wesentlichen gleichbleibendem oder stetig sich verengendem Strömungsquerschnitt vor der ersten Umlenkung aufweisen.

Die US-A-1 926 924 beschreibt einen Filter zur Abscheidung von festen oder flüssigen Teilchen aus einer Gasströmung mit zwischen Profilen gebildeten Strömungskanälen, wobei die Profile etwa sinusförmig und so verlaufen, daß ein Strömungskanal mit variablem Querschnitt einen gekrümmten Abschnitt von zunehmender Querschnittsfläche aufweist, deren Erweiterung nicht wesentlich größer als die normale Expansion der Strömung in diesem Gebiet ist.

Der Erfindung liegt die Aufgabe zugrunde, einen Tropfenabscheider zu entwickeln, mit welchem eine sehr gute Abscheideleistung bei verminderter Tropfenreflexion und gesteigerter Durchrißgeschwindigkeit erzielbar sind.

Diese Aufgabe wird bei einem Tropfenabscheider der im Oberbegriff des Anspruch 1 angegebenen Art dadurch gelöst, daß die Wellenform der Profile im Vergleich zu einer Sinuswelle derart abgewandelt ist, daß die Wendepunkte jedes Profils zumindest auf den Abscheideflächen der Mittelpartie stromabwärts verlagert sind.

Die Tropfenabscheiderprofile nach der Erfindung sind aus mehreren, nicht sinusförmigen Wellenabschnitten zusammengesetzt, wobei die Verlagerung der Wendepunkte im Vergleich zu reinen Sinuswellen in Richtung stromabwärts wegen des so erzielten größeren Auftreffwinkels auf die abscheidewirksamen Flächen zur Unterbindung der Tropfenreflexion und zur Erhöhung der Durchrißgeschwindigkeit führt.

Eine besonders vorteilhafte Dimensionierung der Profile des erfindungsgemäßen Tropfenabscheiders ist in Patentanspruch 2 angegeben.

Während Patentanspruch 2 die Profilgestaltung abstrahiert auf die Skelettlinie beschreibt, ist im Patentanspruch 3 eine vorteilhafte Profilgestaltung gemäß der Erfindung unter Berücksichtigung der Tatsache angegeben, daß die Profile eine (über die Profilhöhe variable) endliche Profildicke haben. Diese Profildicke ist vor der ersten Umlenkung durchschnittlich kleiner als 20% des Abstandes der Skelettlinien zweier benachbarter Profile gehalten. Ferner sind bei einem bevorzugten Tropfenabscheider nach der Erfindung die Krümmungsänderungen der Profile über die Profilhöhe im wesentlichen stetig.

Die Wellen sind bei den erfindungsgemäßen Profilen nicht sinusförmig, sondern asymmetrisch gestaltet. Mit solchen Profilen konnte die Durchrißgeschwindigkeit von einem bis-herigen Bestwert marktgängiger Produkte von ca. 5 m•s$^{-1}$ (horizontaler Einbau) auf ca. 6 m•s$^{-1}$ gesteigert werden, und zwar bei gleich guter Tropfenabscheidung (gleicher Grenztropfendurchmesser).

3

Die Erfindung ist im folgenden anhand schematischer Zeichnungen an Ausführungsbeispielen mit weiteren Einzelheiten näher erläutert.

Es zeigen:

Fig. 1 eine perspektivische Ansicht zweier Profile eines marktgängigen Tropfenabscheiders;

Fig. 2 in vergleichender Darstellung die Skelettlinien zweier Profile von Tropfenabscheidern, wobei durchgezogen ein Profil nach der Dissertation von Engels und gestrichelt ein Profil nach der Erfindung dargestellt sind;

Fig. 3 benachbarte Profile einer Ausführung eines Trop fenabscheiders nach der Erfindung, wobei im Rahmen der Erfindung liegende Abweichungen der Profile gestrichelt gezeichnet sind;

Fig. 4 eine Schnittdarstellung wie Fig. 3, eine weitere Abwandlung eines Profiles für einen Tropfenabscheider nach der Erfindung, das besonders hohe Durchrißgeschwindigkeiten ermöglicht;

Fig. 5 ein Diagramm, bei dem auf der Ordinate der Quotient aus Profilhöhe H und Krümmungsradius r für beide Profilseiten eines Tropfenabscheiders gemäß der Erfindung, nämlich gestrichelt für die in Fig. 3 oder 4 linke Profilseite und strichpunktiert für die rechte Profilseite, über dem Quotienten aus der fortschreitenden abgewickelten Profillänge s zu der Gesamt-Profillänge S.

Die Profile gemäß den Figuren 2 bis 4 zeigen fünf Umlenkungen U, wobei die Umlenkungen U von Wendepunkt W zu Wendepunkt W der Profilkontur gerechnet werden. Dabei liegen die links-bzw. rechtsseitigen Wendepunkte nicht notwendig direkt einander gegenüber.

Die Profile sind im Eintrittsbereich über die Orthogonale zur Eintrittsebene hinaus gekrümmt ("überkrümmt"). Bei den in Fig. 2 bis 4 dargestellten Konfigurationen wird diese Überkrümmung zur Eintrittsebene hin wieder rückgängig gemacht, so daß die Skelettlinie (Mittellinie) des Profils orthogonal zur Eintrittsebene ausläuft. Auf diese Weise kommt eine strömungstechnisch vorteilhafte Eintritts-Satellitenwelle zustande. Durch diese Gestaltung wird insbesondere auch erreicht, daß größere Tropfen auch bei Schräganströmung des Tropfenabscheider-Paketes kaum eine Chance haben, auf direktem Fluge bis zur dritten Abscheidefläche vorzudringen. Falls dies zu einem gewissen Prozentsatz doch geschieht, können Tropfenfragmente, die sich insbesondere beim Aufschlagen größerer Tropfen auf benetzten Wandabschnitten bilden, auf der nachgeschalteten Abscheidefläche eingefangen werden.

In der Fig. 2 bedeuten die Größen $\lambda_{s1}$, $\lambda_{s2}$ die Wellenlängen der kurzen Satellitenwellen in Richtung vor und hinter der Hauptwelle, deren Wellenlänge mit $\lambda_M$ bezeichnet ist. $a_{s1}$, $a_{s2}$ sind die Amplituden der Satellitenwellen, während $a_M$ die Amplitude der Hauptwelle bezeichnet. Mit $w_1$, $w_2$ und $w_3$ sind die Wendepunktabstände von Amplitudenextremwerten der genannten Wellen bezeichnet, während H die Profilhöhe des Gesamtprofiles bedeutet.

Der durchgezogene Sinuswellenverlauf entspricht der in der Dissertation von Engels vorgeschlagenen Profilkonfiguration, während gestrichelt eine Profilkonfiguration nach der Erfindung dargestellt ist. Es ist ersichtlich, daß die Wendepunkte $W_2$ und $W_3$ der Hauptwelle bei dem Profil nach der Erfindung in Strömungsrichtung gegenüber den entsprechenden, nicht bezeichneten Wendepunkten der reinen Sinuswelle nach hinten verlagert sind. Dies führt dazu, daß in einem Gebiet links von der strichpunktierten Mittelachse A bei einer vorgegebenen, durch den Pfeil T angedeuteten Anflugrichtung der Tropfen der Auftreffwinkel $\Theta'$ bei einem Profil nach der Erfindung größer als der Auftreffwinkel $\Theta$ bei dem Sinuswellen-Profil nach Engels wird, so daß die Tropfenreflexion vermindert wird. Hierbei wird in Kauf genommen, daß die Verhältnisse umgekehrt im Bereich rechts von der Mittellinie A sind, was aber keine Rolle spielt, weil die in diesem Bereich impaktierten Tropfen ohnehin unter einem Winkel auftreffen, bei dem eine Reflexion weitestgehend ausgeschlossen ist. Durch Realisierung des gestrichelten, nicht sinusförmigen Profilverlaufes mit den in Strömungsrichtung nach hinten verschobenen Wendepunkten $W_2$ und $W_3$ wird eine wesentliche Verbesserung der Abscheideleistung erzielt.

Bemerkt sei noch, daß die Wendepunkte $W_1$ und $W_4$ im Bereich der Satellitenwellen nicht gegenüber den vergleichbaren Wendepunkten des Sinuswellenprofiles verlagert sein müssen.

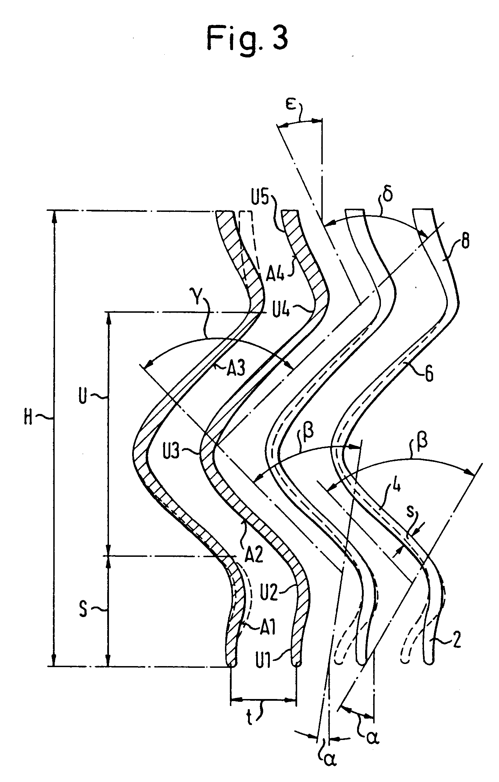

Der folgende Beschreibungsteil bezieht sich auf die Profilgestaltung nach Fig. 3.

Fig. 3 zeigt Profile mit Profilabschnitten 2, 4, 6, 8, welche sich zwischen insgesamt fünf Umlenkungen U1 bis U5 erstrecken und ausgehend von der Grundidee unter Berücksichtigung der möglichen Wechselwirkungen zwischen Tropfen und Wand bzw. einem die Wand bedeckenden Flüssigkeitsfilm konfiguriert wurden (mögliche Wechselwirkungen: Tropfenreflexion, Tropfendestruktion, Tropfeneinfang). Ferner wurde eine optimale Verteilung der Schubspannung angestrebt, die von der Gasströmung auf den aus eingefangenen Tropfen gebildeten Wandfilm wirkt. Dies ist von entscheidender Bedeutung für das Erreichen einer hohen Durchrißgrenze. Für die präzise Beschreibung dieser Profile sowie zur Anknüpfung an den stand der Technik ist es sinnvoll, von der Nomenklatur, wie sie in Fig. 2 für den Verlauf der Skelettlinie eingeführt wurde, abzuweichen.

EP 0 567 930 B1

Die Überkrümmung im Frontbereich, repräsentiert durch zwei Alternativen für den Winkel α, sollte in einem Bereich von ca. 5 - 35°, vorzugsweise bei 15°, liegen, wobei schon nach der ersten Umlenkung ein divergenter Kanalverlauf konfiguriert ist. Dies hat zur Folge, daß Flüssigkeit, die in die "Senke" dieses Bereiches gelangt, bei Schrägstellung des Lamellenpaketes seitlich abfließen kann. Die Gasströmung übt auf dieser Seite des Profils aufgrund von Divergenz und Krümmung des Kanals nur eine geringe Schubspannung auf den Flüssigkeitsfilm aus, so daß dieser nicht in Richtung Austritt des Abscheidekanals mitgezogen wird, solange die hier sehr hohe Durchrißgeschwindigkeit nicht überschritten wird.

Die zweite Umlenkung U2 als Eintrittspartie der Hauptwelle ist noch verhältnismäßig schwach ausgeführt (β ≈ 40 - 80°, bevorzugt 60°), so daß nur größere Tropfen auf der Abscheidefläche A2 eingefangen werden. Dies hat den Vorteil, daß die hier anfallende Flüssigkeitsmenge nicht zu groß wird, so daß die Durchrißgrenze auch in diesem Abschnitt erst bei höheren Geschwindigkeiten erreicht wird. Feinere Tropfen werden erst hinter der dritten Unlenkung U3 auf Abscheideflächen A3 erfaßt, bedingt durch einen hier deutlich größeren Umlenkwinkel (γ ≈ 70 - 110°, bevorzugt 90°). Auch die dritte Umlenkung U3 ist zunächst divergent und anschließend konvergent ausgeführt; die Gründe sind dieselben wie für die Umlenkung U2. Um auch bei schräganströmung der Tropfenabscheider-Eintrittsebene, wie sie sich z. B. in Wäschern von Rauchgasentschwefelungsanlagen häufig nicht vermeiden läßt, eine weitgehende Tropfenabscheidung zu erzielen, ist eine divergente/konvergente vierte Umlenkung U4 mit Abscheidefläche A4 nachgeschaltet. Hier kann der Umlenkwinkel (δ ≈ 38 - 75°, bevorzugt 50°) wieder geringer sein, da auf der Abscheidefläche A4 keine feinen Primärtropfen, sondern allenfalls größere Sekundärtropfen eingefangen werden sollen, die bei Schräganströmung bis zur Fläche A3 gelangt sind und dort nicht eingefangen wurden, sondern beim Aufprall in kleinere Tropfen zerfallen sind, deren Durchmesser jedoch noch deutlich größer sind als der theoretische Grenztropfendurchmesser. An die vierte Umlenkung U4 schließt sich eine fünfte Umlenkung U5 an (ε ≈ 0 - 30°). Diese hat die primäre Aufgabe, für eine strömungstechnisch vorteilhafte, orthogonale Abströmung zu sorgen (Austritts-Satellitenwelle). Falls für die Strömung in den sich anschließenden Gaskanälen eine Schrägabströmung aus dem Tropfenabscheider vorteilhaft ist, kann auf dies Rücknahme der austrittsseitigen Profilüberkrümmung verzichtet werden.

Das Profil wird bereits in der vierten Umlenkung U4 auf seine endgültige Stärke verdickt.

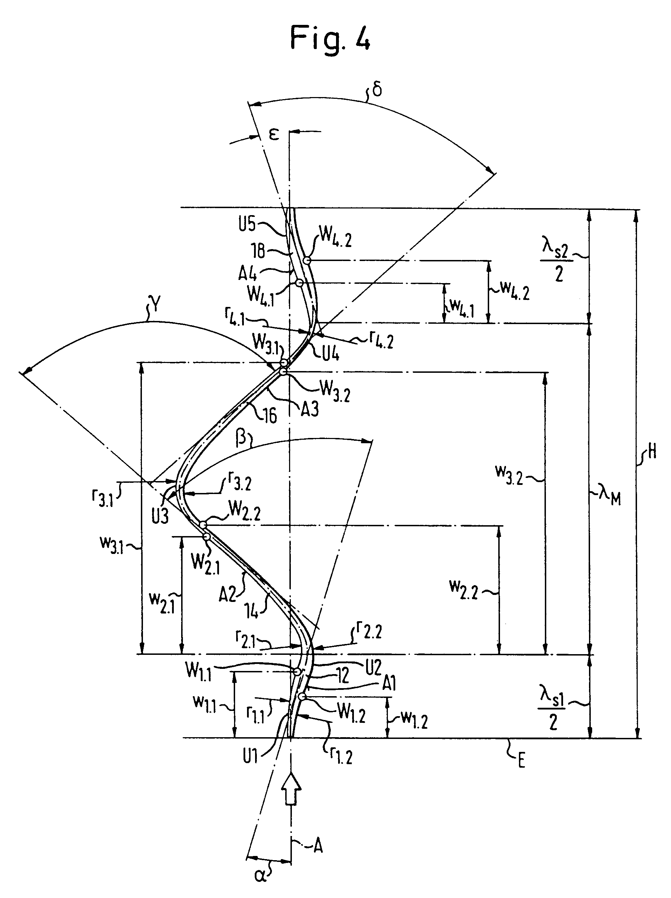

Die Profilgestaltung nach Fig. 3 hat prinzipiell den gleichen Aufbau wie diejenige nach Fig. 4 und folgt den gleichen Bemessungsregeln, wie sie in Anspruch 2 angegeben sind. Das Profil nach Fig. 4 ist jedoch gegenüber demjenigen nach Fig. 3 bevorzugt, wenn eine besonders hohe Durchrißgeschwindigkeit realisiert werden soll. Das Profil nach Fig. 4 hat Profilabschnitte 12, 14, 16, 18, die den Profilabschnitten 2, 4, 6, 8 grundsätzlich entsprechen. Jedoch sind hier die Größen der Winkel α, β, γ, δ und ε, unter welchen die einzelnen Umlenkungen U1, U2, U3, U4 und U5 relativ zueinander geneigt sind, entsprechend den in der Zeichnung dargestellten Winkeln unterschiedlich zur Fig. 3. Auch ist das Profil nach Fig. 4 insgesamt schlanker als dasjenige nach Fig. 3, das heißt, es ist eine geringere Profildicke verwirklicht. Die Teilung t - das ist der Abstand der Skelettlinien zweier benachbarter Profile - ist jedoch prinzipiell gleich wie bei Fig. 3.

Zusätzlich sind in Fig. 4 die Wendepunkte W jeweils mit zwei Indices bezeichnet, von denen der erste sich auf die Nummer der Umlenkung und der zweite auf die jeweilige Profilseite bezieht. Dabei ist die linke Profilseite mit dem Index 1 und die rechte Profilseite mit dem Index 2 bezeichnet. $W_{1,2}$ bedeutet also, daß es sich um den Wendepunkt hinter der ersten Umlenkung U1 auf der rechten Profilseite (2) handelt und so fort. Es ist ersichtlich, daß die Wendepunkte auf den abscheidewirksamen Flächen A1, A2, A3, A4 in Strömungsrichtung gesehen vor die Wendepunkte auf den nicht abscheidewirksamen Wandflächen verlagert angeordnet sind. Mit dem entsprechend indizierten kleinen Buchstaben w sind jeweils die Abstände der Wendepunkte von der Eintrittsebene E (nur für die ersten Wendepunkte $W_{1,1}$ und $W_{1,2}$) sowie der Wendepunkte der Hauptwelle gemessen von dem "Wellenberg" bei Umlenkung U2 und schließlich die Abstände der Wendepunkte in der Austritts-Satellitenwelle von der Umlenkung U4 bezeichnet.

Ferner sind in der Fig. 4 die Krümmungsradien r für die unterschiedlichen Krümmungen an den verschiedenen Umlenkungen U1 bis U5 auf beiden Profilseiten eingezeichnet, wobei die Krümmungsradien r in gleicher Weise wie die Wendepunkte W doppelt indiziert sind.

Mit diesen, der Fig. 4 entnehmbaren Angaben läßt sich ein hinsichtlich der Durchrißgrenze besonders günstiges Profil realisieren.

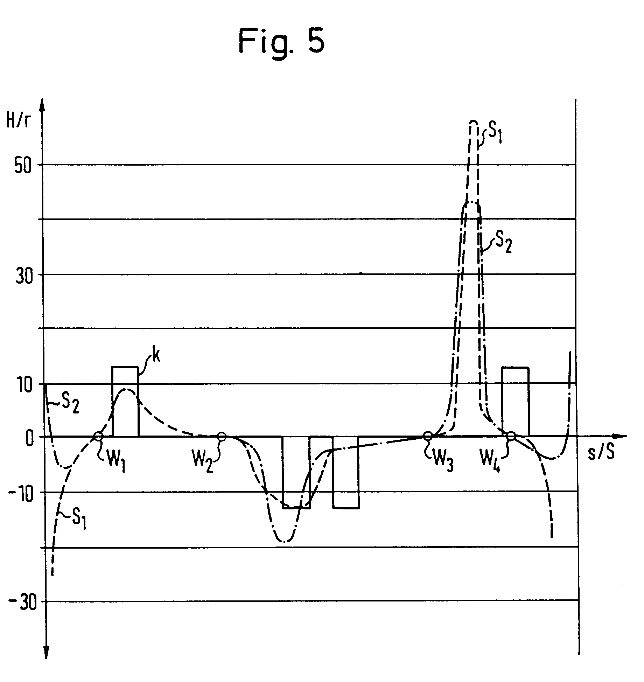

In Fig. 5 ist der beidseitige Verlauf der Profilkrümmung eines Tropfenabscheiders nach Fig. 3, im Vergleich zu den marktgängigen Tropfenabscheider gemäß Fig. 1 dargestellt. Dabei ist auf der Ordinate der Quotient aus der Profilhöhe H zum jeweiligen Krümmungsradius r dargestellt, während auf der Abszisse der Quotient aus der laufenden Koordinate s in Richtung entlang des Profiles bezogen auf die Gesamt-Profillänge S des abgewickelten Profiles dargestellt ist. Dabei ist gestrichelt der linksseitige Krümmungsverlauf $s_1$ und strichpunktiert der rechtsseitige Krümmungsverlauf $s_2$ des Profiles gemäß Fig. 3 eingezeichnet. Ferner sind die Lagen der Wendepunkte $W_1$, $W_2$, $W_3$, $W_4$ (die Indices bezeichnen die zugehörigen

5

Umlenkungen) eingezeichnet.

Es zeigt sich, daß im Gegensatz zu dem marktgängigen bekannten Profil nach Fig. 1 ein Profil nach der Erfindung keine Unstetigkeitsstellen im Krümmungsverlauf aufweist. Dies dürfte für den besonderen Erfolg des Profiles nach der Erfindung mit ein Grund sein. Zur Erläuterung des Rechteckverlaufes der Krümmungsfunktion k über der normierten Profillänge gemäß Fig. 1 sei angemerkt, daß bei dem Profil nach Fig. 1 ebene Abschnitte über Kreisbögen miteinander verbunden sind. Demgemäß ist der Krümmungsverlauf k eine "Sprungfunktion" mit Ausschlägen zwischen 0 und $1/r = 13$.

Der Vergleich der gestrichelten und der strichpunktierten Kurve in Fig. 5 für das erfindungsgemäße Profil nach Fig. 3 zeigt, daß die Krümmungsverlaufe $s_1$ und $s_2$ auf den beiden Profilseiten bis auf unterschiedliche Verläufe im Ein- und Austritt und an den Extremstellen annähernd gleich sind. Dies führt zu einer praktisch deckungsgleichen Lage der Wendepunkte $W_1$ bis $W_4$ auf den beiden Profilseiten. Die unterschiedlichen Verläufe im Eintritt und Austritt insbesondere hinsichtlich der Vorzeichen ergeben sich daraus, daß mathematisch ein Fortschreiten im Uhrzeigersinn negativ und im Gegenuhrzeigersinn positiv definiert ist.

**Patentansprüche**

1. Tropfenabscheider zum Abscheiden von Tropfen aus einer flüssigkeitsbeladenen Gasströmung mit wellenförmigen Profilen, die jeweils eine Eintrittspartie in Gestalt einer Halbwelle kleiner Amplitude und Wellenlänge, eine Mittelpartie in Gestalt einer Hauptwelle großer Amplitude und Wellenlänge und eine Austrittspartie kleiner Amplitude und Wellenlänge aufweisen, die Strömungskanäle mit Umlenkungen bilden, in denen die Gasströmung abwechselnd beschleunigt und verzögert wird, **dadurch gekennzeichnet,** daß die Wellenform der Profile im Vergleich zu einer Sinuswelle derart abgewandelt ist, daß die Wendepunkte jedes Profils zumindest auf den Abscheideflächen der Mittelpartie stromabwärts verlagert sind.

2. Tropfenabscheider nach Anspruch 1,
   **dadurch gekennzeichnet,** daß die Skelettlinien der Profile folgenden Bemessungsregeln gehorchen:
   $\lambda_{s1}/H \approx 0,25 - 0,35$; bevorzugt 0,30
   $\lambda_{s2}/H \approx 0,25 - 0,50$; bevorzugt 0,40
   $\lambda_M/H \approx 0,50 - 0,75$; bevorzugt 0,65
   $a_{s1}/H \approx 0,01 - 0,04$; bevorzugt 0,025
   $a_{s2}/H \approx 0,01 - 0,04$; bevorzugt 0,025
   $a_M/H \approx 0,08 - 0,16$; bevorzugt 0,12

$$\frac{w_2}{\lambda_M} \approx 0,25 - 0,40, \text{ bevorzugt } 0,35$$

$$\frac{w_3}{\lambda_M} \approx 0,75 - 0,94, \text{ bevorzugt } 0,86,$$

worin $\lambda_{s1}$, $\lambda_{s2}$, $\lambda_M$ Wellenlängen; $a_{s1}$, $a_{s2}$, $a_M$ Amplituden; $w_1$, $w_2$, $w_3$ Wendepunktabstände von Amplitudenextremwerten der verschiedenen Wellen und H die Profilhöhe des Gesamtprofiles bedeuten.

3. Tropfenabscheider nach Anspruch 1 oder 2,
   **dadurch gekennzeichnet,** daß die Profile
   - annähernd orthogonal (± 10°, bevorzugt 0°) von der Eintrittsebene ausgehen,
   - ohne relevante Verdickung eine erste schwache Umlenkung (U1) mit einem Neigungswinkel $\alpha \approx 5 - 35°$, bevorzugt 15°, zur Ausströmrichtung auf ca. 5 - 20%, bevorzugt 10%, der Profilhöhe (H) aufweisen,
   - eine zur ersten Umlenkung gegenläufige zweite Umlenkung (U2) mit einem Neigungswinkel $\beta \approx 40 - 80°$, bevorzugt 60°, zur Neigung des Profilabschnitts (2, 12) hinter der ersten Umlenkung (U1) haben, die ca. 13 -35%, bevorzugt 23%, der Profilhöhe (H) beansprucht, mit einem Krümmungsradius ($r_{2.1}$) auf der Innenseite der Umlenkung (U2) von ca. 5 - 18%, bevorzugt 7%, der Profilhöhe (H) und einem Krümmungsradius ($r_{2.2}$) auf der Außenseite von ca. 6 -20%, bevorzugt 9%, der Profilhöhe (H),

- eine zur zweiten Umlenkung gegenläufige dritte Umlenkung (U3) mit einem Neigungswinkel $\gamma \approx$ 70 - 110°, bevorzugt 90°, zur Neigung des Profilabschnitts (4, 14) hinter der zweiten Umlenkung (U2) haben, die ca. 15 - 45%, bevorzugt 35%, der Profilhöhe (H) beansprucht, mit einem Krümmungradius ($r_{3,2}$) auf der Innenseite der Umlenkung (U3) von ca. 3 - 12%, bevorzugt 5%, der Profilhöhe (H) und einen Krümmungsradius ($r_{3,1}$) auf der Außenseite von ca. 6 - 18%, bevorzugt 10%, der Profilhöhe,

- eine zur dritten Umlenkung gegenläufige vierte Umlenkung (U4) mit einem Neigungswinkel $\delta \approx 38$ - 75°, bevorzugt 60°, zur Neigung des Profilabschnitts (6, 16) hinter der dritten Umlenkung (U3) haben, die ca. 10 - 20%, bevorzugt 16%, der Profilhöhe (H) beansprucht, mit einem Krümmungsradius ($r_{4,1}$) auf der Innenseite von ca. 2 - 10%, bevorzugt 4%, der Profilhöhe (H) und einem Krümmungsradius ($r_{4,2}$) auf der Außenseite von ca. 6 - 15%, bevorzugt 10%, der Profilhöhe,

- eine zur vierten Umlenkung gegenläufige fünfte Umlenkung (U5) mit einem Neigungswinkel $\epsilon \approx 0$ - 30°, bevorzugt 20°, haben, die ca. 0 - 20%, bevorzugt 15%, der Profilhöhe beansprucht.

**4.** Tropfenabscheider nach einem der Ansprüche 1 bis 3,
**dadurch gekennzeichnet,** daß die Profildicke (s) jedes Profils vor der ersten Umlenkung durchschnittlich kleiner als 20% des Abstandes (t) der Skelettlinien zweier benachbarter Profile ist.

**5.** Tropfenabscheider nach Anspruch 3,
**dadurch gekennzeichnet**, daß die Krümmungsänderungen der Profile über die Profilhöhe (H) im wesentlichen stetig sind.

## Claims

**1.** A mist eliminator for eliminating droplets from a liquid-laden gaseous flow comprising wave-shaped profiles each including an entrant part configured as a half-wave of small amplitude and wavelength, a central part configured as a principal wave of large amplitude and wavelength, and an exit part of small amplitude and wavelength, said profiles constituting flow passages with reversing portions where the gaseous flow is alternately accelerated and decelerated, **characterized** in that the wave shape of said profiles is modified as compared to a sine-wave such that the turning points of each profile at least on the eliminating surfaces of the central part are shifted in downstream direction.

**2.** The mist eliminator as claimed in claim 1, **characterized** in that the skeleton lines of the profiles are governed by the following dimensioning rules:

$\lambda_{s1}/H \approx 0.25 - 0.35$; preferentially 0.30
$\lambda_{s2}/H \approx 0.25 - 0.50$; preferentially 0.40
$\lambda_{M}/H \approx 0.50 - 0.75$; preferentially 0.65
$a_{s1}/H \approx 0.01 - 0.04$; preferentially 0.025
$a_{s2}/H \approx 0.01 - 0.04$; preferentially 0.025
$a_{M}/H \approx 0.08 - 0.16$; preferentially 0.12

$$\frac{w_2}{\lambda_M} \approx 0.25 - 0.40; \qquad \text{preferentially } 0.35$$

$$\frac{w_3}{\lambda_M} \approx 0.75 - 0.94; \qquad \text{preferentially } 0.86$$

in which $\lambda_{s1}$, $\lambda_{s2}$, $\lambda_M$ are wavelengths; $a_{s1}$, $a_{s2}$, $a_M$ are amplitudes; $w_1$, $w_2$, $w_3$ are turning point distances of extreme amplitude values of the various waves, and H is the height of the overall profile.

3. The mist eliminator as claimed in claim 1 or 2, **characterized** in that the profiles

- extend approximately orthogonally (± 10°, preferentially 0°) from the entrance plane,
- without any relevant enlargement comprise a first slight reversing portion (U1) at an angle of inclination $\alpha \approx$ 5-35°, preferentially 15°, to the direction of outgoing flow at about 5-20%, preferentially 10%, of the profile height (H),
- comprise a second reversing portion (U2) in opposition to said first reversing portion at an angle of inclination $\beta \approx$ 40-80°, preferentially 60°, to the inclination of the profile section (2, 12) behind the first reversing portion (U1), said second reversing portion taking up to about 13-35%, preferentially 23%, of the profile height (H), with a radius of curvature ($r_{2.1}$) on the inner side of the reversing portion (U2) of about 5-18%, preferentially 7%, of the profile height (H) and a radius of curvature ($r_{2.2}$) on the outer side of 6-20%, preferentially 9%, of the profile height (H),
- comprise a third reversing portion (U3) in opposition to said second reversing portion at an angle of inclination $\gamma \approx$ 70-110°, preferentially 90°, to the inclination of the profile section (4, 14) behind said second reversing portion (U2), said third reversing portion taking up to about 15-45%, preferentially 35%, of the profile height (H), with a radius of curvature ($r_{3.2}$) on the inner side of the reversing portion (U3) of to about 3-12%, preferentially 5%, of the profile height (H) and a radius of curvature ($r_{3.1}$) on the outer side of c. 6-18%, preferentially 10%, of the profile height,
- a fourth reversing portion (U4) in opposition to said third reversing portion at an angle of inclination $\delta \approx$ 38-75°, preferentially 60°, to the inclination of the profile section (6, 16) behind the third reversing portion (U3), said fourth reversing portion taking up to about 10-20%, preferentially 16%, of the profile height (H), with a radius of curvature ($r_{4.1}$) on the inner side of about 2-10%, preferentially 4%, of the profile height (H) and a radius of curvature ($r_{4.2}$) on the outer side of about 6-15%, preferentially 10%, of the profile height,
- a fifth reversing portion (U5) in opposition to said fourth reversing portion at an angle of inclination $\epsilon \approx$ 0-30°, preferentially 20°, said fifth reversing portion taking up to about 0-20%, preferentially 15%, of the profile height.

4. The mist eliminator as claimed in one of claims 1 to 3, **characterized** in that the profile thickness (s) of each profile upstream of the first reversing portion on an average is less than 20% of the pitch (t) of the skeleton lines of two adjacent profiles.

5. The mist eliminator as claimed in claim 3, **characterized** in that the change of curvature of the profile is substantially steady along the profile height (H).

**Revendications**

1. Séparateur de gouttes pour séparer des gouttes à partir d'un écoulement de gaz chargé en liquide avec des profils ondulés qui présentent chacun une partie d'entrée, sous forme d'une moitié d'ondulation de faible amplitute et de faible longueur d'onde, une partie moyenne, sous forme d'une moitié d'ondulation de grande amplitude et de grande longueur d'onde, et une partie de sortie de faible amplitude et de faible longueur d'onde, qui forment des canaux d'écoulement avec des changements de direction, dans lesquels l'écoulement de gaz est alternativement accéléré et retardé, caractérisé en ce que la forme des ondulations des profils se différentie d'une ondulation sinusoïdale de façon telle que les points d'inflexion de chaque profil sont décalés en aval au moins sur les surfaces de séparation de la partie moyenne.

2. Séparateur de gouttes selon la revendication 1, caractérisé en ce que les lignes moyennes des profils respectent les règles suivantes de dimensionnement :
$\lambda_{s1}/H \approx$ 0,25 - 0,35 ; de préférence 0,30
$\lambda_{s2}/H \approx$ 0,25 - 0,50 ; de préférence 0,40
$\lambda_M/H \approx$ 0,50 - 0,75 ; de préférence 0,65
$a_{s1}/H \approx$ 0,01 - 0,04 ; de préférence 0,025
$a_{s2}/H \approx$ 0,01 - 0,04 ; de préférence 0,025
$a_M/H \approx$ 0,08 - 0,16 ; de préférence 0,12
$w_2/\lambda_M \approx$ 0,25 - 0,40, de préférence 0,35
$w_3/\lambda_M \approx$ 0,75 - 0,94, de préférence 0,86,
où $\lambda_{s1}$, $\lambda_{s2}$, $\lambda_M$ représentent les longueurs d'onde ; $a_{s1}$, $a_{s2}$, $a_M$ représentent les amplitudes ; $w_1$, $w_2$, $w_3$ représentent les distances entre les points d'inflexion et les valeurs extrêmes d'amplitude des diverses ondulations ; et H représente la hauteur de profil du profil total.

3. Séparateur de gouttes selon la revendication 1 ou 2, caractérisé en ce que les profils
   - s'écartent de façon à peu prés orthogonale (± 10°, de préférence 0°) du plan d'entrée,
   - présentent, sans épaississement correspondant, un premier changement de direction peu important (U1) avec un angle d'inclinaison $\alpha \approx 5 - 35°$, de préférence 15°, par rapport à la direction d'écoulement, sur environ 5 - 20 %, de préférence 10 %, de la hauteur de profil (H),
   - ont un deuxième changement de direction (U2) opposé au premier changement de direction, avec un angle d'inclinaison $\beta \approx 40 - 80°$, de préférence 60°, par rapport à la direction de la section de profil (2, 12) derrière le premier changement de direction (U1), qui correspond à environ 13 - 35 %, de préférence 23 %, de la hauteur de profil (H), avec un rayon de courbure ($r_{2.1}$) sur le côté intérieur du changement de direction (U2) d'environ 5 - 18 %, de préférence 7 %, de la hauteur de profil (H), et un rayon de courbure ($r_{2.2}$) sur le côté extérieur d'environ 6 - 20 %, de préférence 9 %, de la hauteur de profil (H),
   - ont un troisième changement de direction (U3) opposé au deuxième changement de direction, avec un angle d'inclinaison $\gamma \approx 70 - 110°$, de préférence 90°, par rapport à la direction de la section de profil (4, 14) derrière le deuxième changement de direction (U2), qui correspond à environ 15 - 45 %, de préférence 35 %, de la hauteur de profil (H), avec un rayon de courbure ($r_{3.2}$) sur le côté intérieur du changement de direction (U3) d'environ 3 - 12 %, de préférence 5 %, de la hauteur de profil (H), et un rayon de courbure ($r_{3.1}$) sur le côté extérieur d'environ 6 - 18 %, de préférence 10 %, de la hauteur de profil,
   - ont un quatrième changement de direction (U4) opposé au troisième changement de direction, avec un angle d'inclinaison $\delta \approx 38 - 75°$, de préférence 60°, par rapport à la direction de la section de profil (6, 16) derrière le troisième changement de direction (U3), qui occupe environ 10 - 20 %, de préférence 16 %, de la hauteur de profil (H), avec un rayon de courbure ($r_{4.1}$) sur le côté intérieur d'environ 2 - 10 %, de préférence 4 %, de la hauteur de profil (H), et un rayon de courbure ($r_{4.2}$) sur le côté extérieur d'environ 6 - 15 %, de préférence 10 %, de la hauteur de profil,
   - ont un cinquième changement de direction (U5) opposé au quatrième changement de direction, avec un angle d'inclinaison $\epsilon \approx 0 - 30°$, de préférence 20°, qui occupe environ 0 - 20 %, de préférence 15 %, de la hauteur de profil.

4. Séparateur de gouttes selon une des revendications 1 à 3, caractérisé en ce que l'épaisseur de profil (s) de chaque profil avant le premier changement de direction est en moyenne inférieure à 20 % de la distance (t) qui sépare les lignes moyennes de deux profils voisins.

5. Séparateur de gouttes selon la revendication 3, caractérisé en ce que les variations de courbure des profils sur la hauteur de profil (H) sont essentiellement continues.

Fig. 1

Fig. 2

# Fig. 3

# Fig. 4

# Fig. 5